# FASCICULE DE BREVET EUROPEEN

(11) **EP 2 020 322 B1**
(45) Date de publication et mention de la délivrance du brevet: **07.10.2009**
(21) Numéro de dépôt: 08161599.9
(22) Date de dépôt: 31.07.2008
(51) Int. Cl.: B60J 7/00

(54) **Dispositif d'occultation d'une surface vitrée d'un véhicule automobile, équipé de palettes pare-soleil, et véhicule automobile correspondant.**
Abdeckungsvorrichtung für Glasfläche eines Kraftfahrzeugs, die mit Sonnenschutzlamellen ausgestattet ist, und entsprechendes Kraftfahrzeug
Device for hiding a glass surface of an automobile, fitted with sun visor elements, and corresponding automobile.

(30) Priorité: 01.08.2007 FR 0756883
(43) Date de publication de la demande: 04.02.2009
(73) Titulaire: Wagon SAS, 79302 Bressuire Cédex (FR)
(72) Inventeur: Mounier, Laurent, 78140, VELIZY VILLACOUBLAY (FR)
(74) Mandataire: Bioret, Ludovic

(56) Documents cités:
- EP-A- 1 422 093
- EP-A- 1 495 889
- EP-A- 1 882 604
- DE-A1- 10 338 722
- DE-A1-102005 061 416
- US-A- 6 065 793
- US-A1- 2004 160 082

## Description

Le domaine de l'invention est celui des véhicules automobiles, et plus particulièrement de l'occultation de surfaces vitrées correspondant à une portion d'un pavillon vitré et/ou à la partie supérieure d'un pare-brise.

Les surfaces vitrées, et en particulier les pavillons vitrés, sont de plus en plus développées dans les véhicules automobiles. Ils confèrent un confort et une impression d'espace, ainsi qu'une meilleure visibilité. Cependant, dans certains cas, notamment quand l'ensoleillement est important, il est souhaitable de pouvoir occulter au moins en partie ces surfaces vitrées.

Pour cela, on a développé plusieurs techniques. La plus connue consiste à utiliser un ou plusieurs stores à enrouleur, actionnables manuellement ou de façon motorisée.

Une autre approche est la mise en oeuvre d'un velum, c'est-à-dire d'une plaque rigide, qui peut être ramené en position déployée en regard de la zone à occulter, et rangé en position repliée dans un logement prévu à cet effet dans la garniture intérieure du véhicule.

Par ailleurs, pour protéger le conducteur et le passager avant contre l'éblouissement, en particulier lorsque le soleil est relativement bas, on utilise depuis très longtemps des palettes pare-soleil, montées mobiles en rotation au niveau de la partie supérieure du pare-brise, pour pouvoir être soit placées parallèlement au pavillon en position de repos, soit inclinées vers une position de protection contre l'éblouissement.

De tels pare-soleil sont difficiles à installer sur les véhicules fortement vitrés, et notamment sur ceux ne présentant pas d'interruption entre le pare-brise et le pavillon vitré. Non seulement la solidarisation d'une palette pare-soleil sur une surface vitrée serait relativement difficile, mais en outre l'aspect esthétique conféré par la surface vitrée serait fortement dégradé.

On a donc imaginé de monter les palettes pare-soleil sur l'élément d'occultation du pavillon. Ainsi, les palettes sont disponibles lorsque l'élément d'occultation (qu'il s'agisse d'un store ou d'un velum) est déployé. En revanche, lorsque ce dispositif est replié, il ramène avec lui les palettes pare-soleil, préalablement ramenées dans le prolongement de l'élément d'occultation, qui sont alors escamotées. Une telle technique est par exemple décrite dans le document de brevet EP-1 777 090 au nom de la demanderesse.

Cette approche présente l'inconvénient d'une construction, d'une mise en place et d'un réglage relativement complexes, et donc coûteux. En effet, le dispositif comprend de nombreux éléments distincts, qu'il faut assembler et régler. Ceci est peu aisé, notamment lorsque des jeux importants doivent être prévus.

Un autre inconvénient de cette approche est que les palettes ne peuvent être utilisées que lorsque l'élément d'occultation est intégralement déployé. Dans certains cas, l'utilisateur peut cependant souhaiter occulter la partie supérieure du pare-brise, à l'aide d'une palette, sans occulter le pavillon.

Encore un autre inconvénient de cette approche est qu'il est nécessaire de prévoir un logement important pour le dispositif, dans la position repliée, notamment s'il s'agit d'un velum, puisqu'il est nécessaire d'occulter dans un même plan l'élément d'occultation et la ou les palettes.

L'invention a notamment pour objectif de pallier ces différents inconvénients de l'état de l'art.

Plus précisément, un objectif de l'invention est de fournir une technique d'occultation d'une surface vitrée d'un pavillon et/ou de la partie supérieure d'un pare-brise qui permette un réglage multi-position du ou des éléments d'occultation.

Un autre objectif de l'invention est de fournir une telle technique, qui soit simple à mettre en oeuvre, peu coûteuse, et peu sensible aux jeux et aux variations de température.

L'invention a également pour objectif, dans au moins un mode de réalisation, de fournir une telle technique, qui offre également des fonctions de palette pare-soleil qui soient simples et peu coûteuses à fabriquer et à monter sur un véhicule.

Un autre objectif de l'invention est de fournir une telle technique, dans au moins un mode de réalisation, qui permette l'utilisation des palettes pare-soleil dans plusieurs positions d'un (ou plusieurs) élément d'occultation.

L'invention a encore pour objectif, dans au moins un mode de réalisation, de fournir une telle technique, qui permette un actionnement manuel simple et efficace du ou des éléments d'occultation.

Ces objectifs, ainsi que d'autres qui apparaîtront par la suite, sont atteints à l'aide d'un dispositif d'occultation pour pavillon et/ou pare-brise d'un véhicule automobile selon la revendication 1.

On obtient ainsi un système simple et efficace, permettant un arrêt en toute position de l'élément d'occultation coulissant.

Lesdits godrons peuvent notamment être de section sensiblement circulaire, et être inscrits dans le patin de façon que seule ladite section sensiblement demi-circulaire affleure.

Dans un mode de réalisation particulier, lesdits godrons sont réalisés en néoprène.

Selon un mode de réalisation de l'invention, ledit élément d'occultation coulissant présente :
- une première portion d'extrémité formant barre de tirage, pour permettre un déplacement manuel dudit élément d'occultation coulissant ;
- une deuxième portion, d'épaisseur réduite par rapport à l'épaisseur de ladite première portion, et définissant un espace de logement pour ladite palette d'occultation.

Dans une position repliée, ladite palette est ramenée sensiblement parallèle audit élément d'occultation, et occupe au moins partiellement ledit espace de logement.

Ainsi, on dispose d'un système particulièrement simple et efficace, permettant d'agir aisément sur l'élément d'occultation par la barre de tirage, et sur la palette, dans toutes les positions de l'élément occulteur.

En outre, l'encombrement est réduit, notamment dans la position repliée de la palette.

Avantageusement, ledit élément d'occultation coulissant est mobile entre une position de rangement, dans laquelle il pénètre partiellement dans une zone de rangement, et au moins une position déployée.

Cette zone de rangement est destinée uniquement à l'élément d'occultation, ce qui permet d'en réduire sa profondeur. La palette reste à l'extérieur de cette zone de rangement.

Selon un mode de réalisation particulier de l'invention, ledit élément d'occultation et/ou ladite palette peut donc porter au moins une butée permettant de ménager un espace libre entre le fond dudit élément d'occultation et ladite palette, dans ladite position repliée.

Ceci permet de faciliter le passage dans la position de rangement.

Avantageusement, la ou lesdites butées sont placées au voisinage de l'axe d'articulation de ladite palette.

Notamment, ledit espace libre permet le passage d'une portion d'un élément de garniture intérieure définissant ladite zone de rangement, ladite palette restant à l'extérieur de ladite garniture intérieure dans ladite position de rangement.

Selon un mode de réalisation particulier, la ou lesdites butées viennent en contact avec un élément de garniture intérieure définissant ladite zone de rangement, dans ladite position de rangement.

Selon une autre caractéristique particulière de l'invention, ledit élément d'occultation coulissant coopère avec deux patins associés chacun à l'un desdits rails de guidage.

Avantageusement, lesdits patins sont des patins de grande longueur, présentant par exemple une longueur supérieure ou égale à 20 cm.

Le ou lesdits éléments de frottement peuvent notamment s'étendre parallèlement à l'axe desdits rails, sur une portion centrale desdits patins, par exemple sur une longueur comprise entre 5 et 12 cm.

Selon un mode de réalisation particulier, chaque patin comprend un premier élément de frottement sur sa face supérieure et un second élément de frottement sur sa face inférieure.

Lesdits éléments de frottement peuvent notamment être surmoulés sur lesdits patin. Ils sont par exemple réalisés en néoprène, ou en un matériau présentant des caractéristiques similaires.

Dans un mode de réalisation de l'invention, lesdits éléments de frottement présentent une section définissant sensiblement un arc de cercle, par exemple pour former des godrons.

L'invention concerne également les véhicules automobiles comprenant au moins un dispositif d'occultation tel que décrit ci-dessus.

Un tel véhicule peut notamment comprendre deux éléments d'occultation indépendants, associés respectivement à la place du conducteur et à la place du passager avant.

Ceux-ci peuvent être regroupés dans un même élément support, destiné à être solidarisé au véhicule, ou être montés indépendamment. On peut également prévoir un unique élément d'occultation coulissant, équipé de deux palettes pare-soleil déployables indépendamment.

D'autres caractéristiques et avantages de l'invention apparaîtront à la lecture de la description suivante de deux modes de réalisation préférentiels, donnés à titre de simple exemple illustratif et non limitatif, et des figures annexées parmi lesquelles :
- la figure 1 illustre un exemple de dispositif d'occultation selon l'invention ;
- les figures 2A et 2B présentent l'un des éléments d'occultation du dispositif d'occultation de la figure 1, respectivement en position repliée, ou rétractée, et en position déployée ;
- les figures 3A et 3B sont des vues en coupe des éléments d'occultation, correspondant respectivement aux figures 2A et 2B ;
- la figure 4 illustre les moyens de guidage en coulissement, et notamment les patins, des éléments d'occultation des figures précédentes;
- la figure 5 est une vue en coupe simplifiée d'un patin de la figure 4.

L'invention concerne donc un dispositif d'occultation d'une surface vitrée, correspondant à une portion d'un pavillon vitré et/ou à la partie supérieure d'un pare-brise. Ce dispositif cumule, de façon simple et peu coûteuse, les fonctions d'éléments d'occultation par coulissement et de palettes, ou raquettes, pare-soleil.

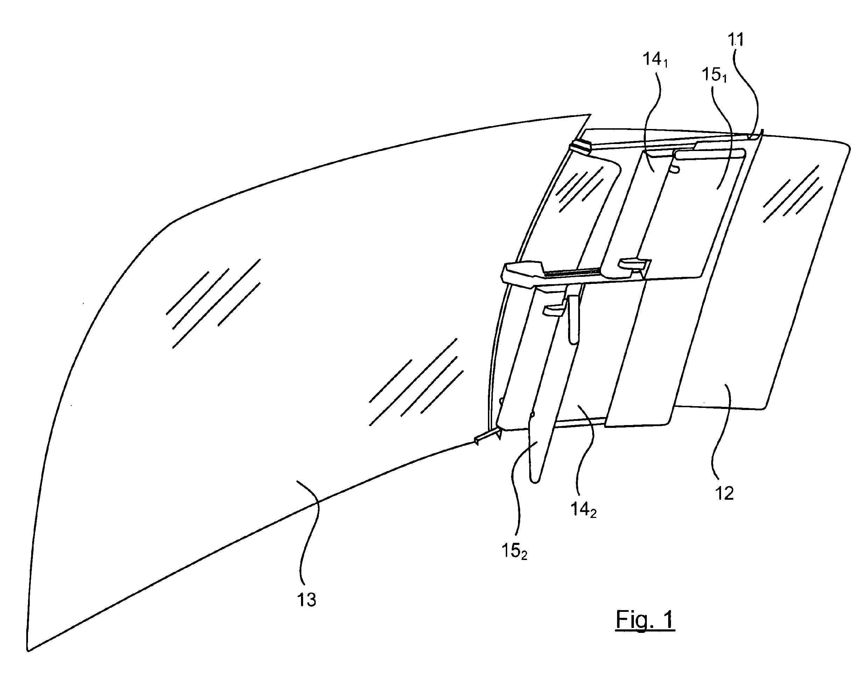

Comme illustré de façon schématique par la figure 1, le dispositif comprend un élément de support d'occulteur 11, destiné à être solidarisé à la structure ou à la garniture intérieure du véhicule, sous le pavillon 12, et en bordure supérieure du pare-brise 13. Il comprend notamment des zones de rangement, dans lesquelles chaque élément d'occultation (présenté par la suite) peut être escamoté dans sa position de rangement et des rails de guidage, permettant le déplacement en coulissement de ces éléments d'occultation.

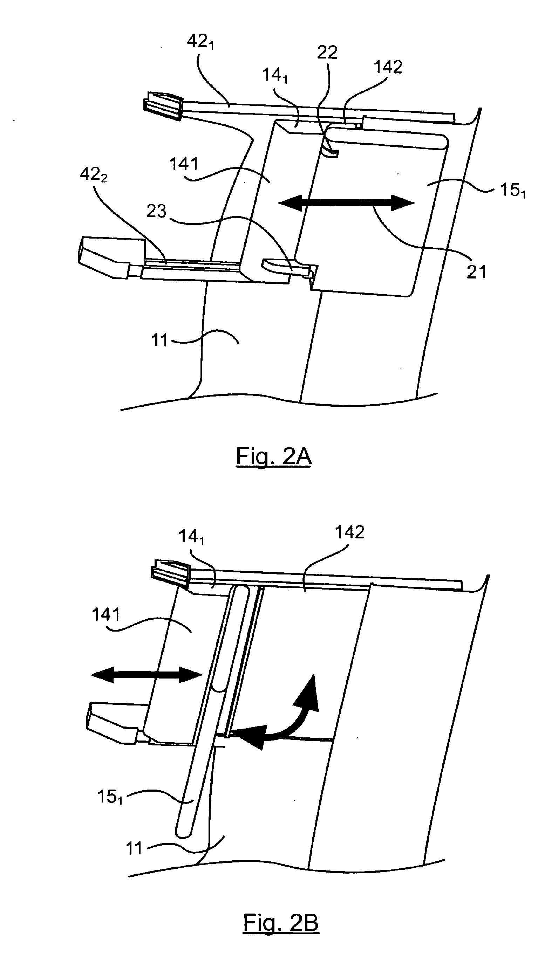

Dans le mode de réalisation décrit par la figure 1, il est prévu deux éléments d'occultation indépendants 14₁ et 14₂, portant respectivement une palette pare-soleil 15₁, 15₂. En conséquence, chaque élément d'occultation coulissant est guidé dans deux rails, un rail latéral 42₁ et un rail central 42₂ (figure 2A). Dans un autre mode de réalisation, on peut bien sûr prévoir un unique élément d'occultation coulissant portant deux palettes.

Chaque élément d'occultation peut prendre une position rétractée, ou repliée, comme celle de l'élément 14₁ (voir également figure 2A), et au moins une position déployée, comme l'élément d'occultation 14₂ (voir également figure 2B). Dans toutes les positions, la palette 15₁, 15₂ peut être déplacée en rotation, pour passer d'une position de rangement, dans laquelle elle est ramenée parallèlement à l'élément d'occultation, et une position d'occultation, ou de protection, à laquelle elle s'étend sensiblement perpendiculairement à l'élément d'occultation.

Ces deux positions sont présentées de façon plus détaillée sur les figures 2A et 2B respectivement.

Sur ces deux figures, pour faciliter la compréhension, on a illustré un seul élément d'occultation 14₁.

Comme on le voit sur la figure 2A, l'élément d'occultation coulissant 14₁ est une pièce rigide, avantageusement monobloc, comportant essentiellement deux parties :
- une première portion 141 formant barre de tirage, que l'utilisateur peut saisir pour déplacer l'élément d'occultation en coulissement le long des rails, dans les deux sens (flèche 21) ;
- une seconde portion 142, d'épaisseur réduite par rapport à la première portion 141, définissant un espace de logement dans laquelle vient se loger au moins en partie la palette 15₁ dans sa position repliée.

Cette palette 15₁ est articulée à l'élément d'occultation 14₁, par l'intermédiaire de deux pièces 22, 23, de façon classique en soi.

Comme illustrée par la figure 2B, qui présente l'élément d'occultation 14₁ dans sa position déployée, la palette 15₁ peut être déplacée en rotation, et ce quelle que soit la position de l'élément d'occultation 14₁.

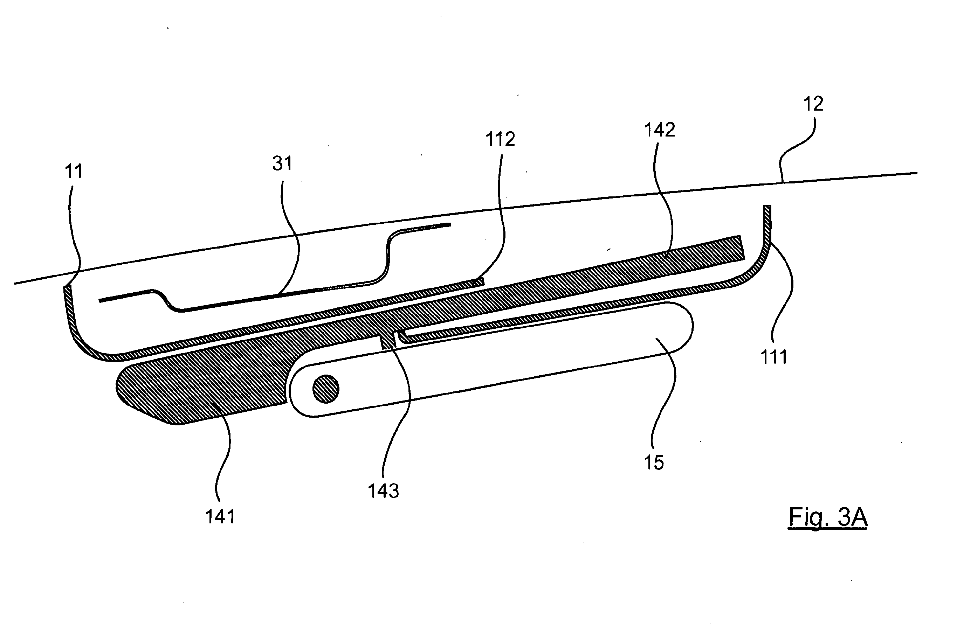

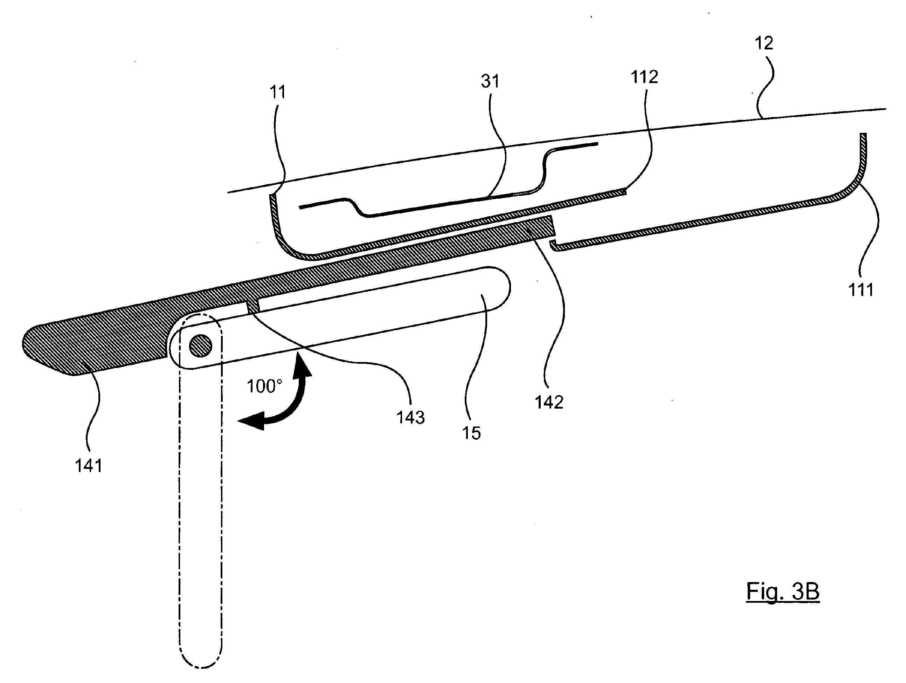

Comme cela apparaît plus clairement sur les vues en coupe des figures 3A et 3B, la seconde partie, ou portion, 142 de l'élément d'occultation coulissant est conçu de façon à pénétrer dans le support 11 dans un espace, ou zone, de rangement défini par un enjoliveur 111, définissant une fente de passage 112.

Le support d'occulteur 11 est solidarisé à la traverse 31 par tout moyen adéquat.

Dans la position repliée (figure 3A) la majeure partie de la portion 142 pénètre donc à l'intérieur de l'élément support 11. En revanche, la palette 15 reste à l'extérieur de ce logement. Ceci permet de déplacer cette palette 15 dans toutes les positions de l'élément d'occultation, lorsque celui-ci est en position de rangement.

Ceci permet également de limiter l'épaisseur de l'élément support 11.

L'élément d'occultation comprend préférentiellement au moins un talon 143 formant butée pour définir la position repliée de la palette 15, de façon à ménager un espace suffisant avec la portion 142 de l'élément d'occultation, pour permettre le passage de l'enjoliveur 111 entre les deux pièces.

Ce talon 143 assure également une fonction de butée avec l'extrémité de l'enjoliveur 111, pour définir la position maximale de rangement de l'élément d'occultation (qui correspond par exemple sensiblement à un alignement entre l'extrémité de la première portion 141 et de l'élément support 11).

Il est à noter que, dans un autre mode de réalisation, un talon peut être formé sur la palette 15.

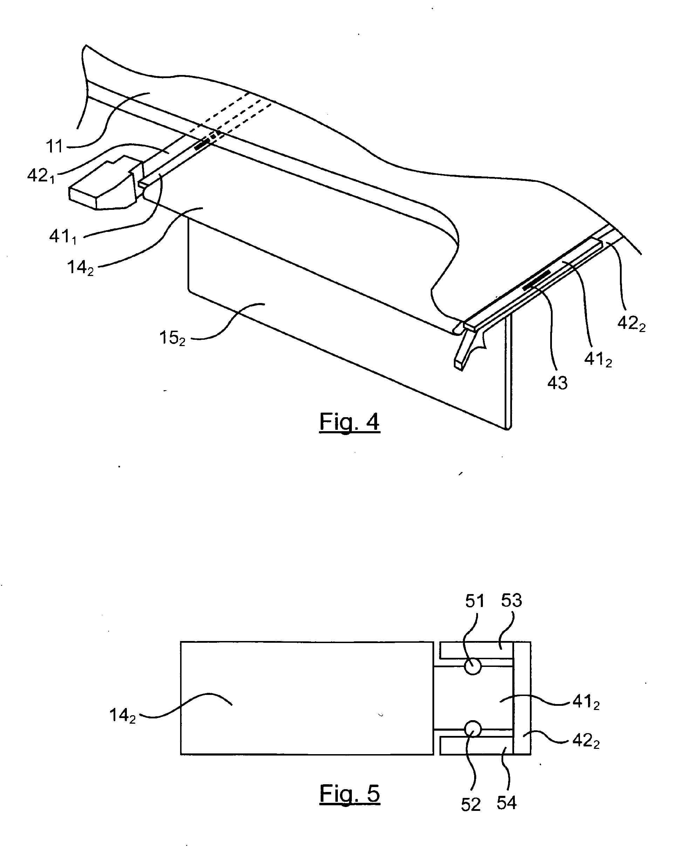

Comme illustré par la figure 4, le guidage de l'élément d'occultation 14₂ peut être assuré par l'intermédiaire de deux patins 41₁, 41₂ coulissant respectivement dans les rails 42₁ et 42₂, solidaires de l'élément support 11.

Ces patins 41₁ et 41₂ présentent avantageusement une longueur importante, préférentiellement supérieure à 100 mm (par exemple de l'ordre de 250 mm). Cette grande longueur va à l'encontre des à priori de l'homme du métier, qui considère généralement que les patins de guidage doivent être de taille réduite pour limiter les différents problèmes dus aux jeux et aux frottements intempestifs, permettent d'obtenir un guidage de bonne qualité, y compris lorsque l'utilisateur n'agit pas sur le milieu de la portion de tirage 141.

Chacun de ces patins comprend avantageusement, au moins sur une portion centrale (par exemple sur une longueur comprise entre 50 et 120 mm), un élément de frottement 43, qui assure une fonction de freinage, afin d'assurer un glissement dur, permettant de maintenir le dispositif d'occultation dans toutes les positions de sa course selon les désirs de l'utilisateur.

Ces éléments de freinage peuvent par exemple être réalisés sous la forme de deux godrons 51 et 52, comme illustrés sur la coupe schématique de la figure 5. Ces godrons 51 et 52 sont par exemple surmoulés en néoprène sur le patin 51 et viennent en appui contre les semelles 53 et 54 du rail 42₂. Pour faciliter la lecture de la figure 4, la semelle supérieure 53 n'est pas représentée.

Ces godrons sont sensiblement cylindriques, et ont donc une section sensiblement circulaire, comme on le voit sur la figure 5. Le patin présente deux logements dans lesquels s'inscrivent (par exemple lors du surmoulage, ou à force) les godrons, de façon que n'affleure de la surface du patin qu'une section sensiblement demi-circulaire, définissant un bossage sur la surface du patin.

Ces godrons 51 et 52 sont montés symétriquement par rapport au patin, pour venir en contact respectivement avec les semelles latérales 53 et 54 du rail.

## Revendications

1. Dispositif d'occultation pour pavillon et/ou pare-brise d'un véhicule automobile, comprenant au moins un élément d'occultation coulissant (14₁, 14₂), guidé par deux rails de guidage et coopérant avec au moins une palette d'occultation (15₁, 15₂) articulée par rapport audit élément d'occultation coulissant (14₁, 14₂),
**caractérisé en ce que** ledit élément d'occultation coulissant (14₁, 14₂) coopère avec deux patins (41₁, 41₂) circulant chacun dans l'un desdits rails de guidage (42₁, 42₂), portant chacun deux godrons (51, 52) surmoulés, lesdits godrons présentant une section sensiblement demi-circulaire affleurant de la surface dudit patin, et définissant un élément de frottement avec les semelles latérales (53, 54) dudit rail, de façon à assurer un glissement dur desdits patins dans lesdits rails.

2. Dispositif d'occultation selon la revendication 1, **caractérisé en ce que** lesdits godrons (51, 52) sont de section sensiblement circulaire, et sont inscrits dans ledit patin (41₁) de façon que seule ladite section sensiblement demi-circulaire affleure.

3. Dispositif d'occultation selon l'une quelconque des revendications 1 et 2, **caractérisé en ce que** lesdits godrons (51, 52) sont réalisés en néoprène.

4. Dispositif d'occultation selon l'une quelconque des revendications 1 à 3, **caractérisé en ce que** ledit élément d'occultation coulissant présente :
- une première portion d'extrémité (141) formant barre de tirage, pour permettre un déplacement manuel dudit élément d'occultation coulissant ; et
- une deuxième portion (142), d'épaisseur réduite par rapport à l'épaisseur de ladite première portion, et définissant un espace de logement pour ladite palette d'occultation,
et **en ce que** ladite palette (15₁, 15₂) est ramenée sensiblement parallèle audit élément d'occultation (14₁, 14₂), dans une position repliée, de façon à occuper au moins partiellement ledit espace de logement.

5. Dispositif d'occultation selon la revendication 4, **caractérisé en ce que** ledit élément d'occultation coulissant (14₁, 14₂) est mobile entre une position de rangement, dans laquelle il pénètre partiellement dans une zone de rangement, et au moins une position déployée.

6. Dispositif d'occultation selon l'une quelconque des revendications 4 et 5, **caractérisé en ce que** ledit élément d'occultation (14₁, 14₂) et/ou ladite palette (15₁, 15₂) porte au moins une butée (143) permettant de ménager un espace libre entre ledit élément d'occultation et ladite palette, dans ladite position repliée.

7. Dispositif d'occultation selon la revendication 6, **caractérisé en ce que** la ou lesdites butées (143) sont placées au voisinage de l'axe d'articulation de ladite palette.

8. Dispositif d'occultation selon la revendication 6, **caractérisé en ce que** ledit espace libre permet le passage d'une portion d'un élément de garniture intérieure définissant ladite zone de rangement, ladite palette restant à l'extérieur de ladite garniture intérieure dans ladite position de rangement.

9. Dispositif d'occultation selon l'une quelconque des revendications 6 à 8, **caractérisé en ce que** la ou lesdites butées (143) viennent en contact avec un élément de garniture intérieure définissant ladite zone de rangement, dans ladite position de rangement.

10. Dispositif d'occultation selon l'une quelconque des revendications 1 à 9, **caractérisé en ce que** lesdits patins (41₁, 41₂) présentent une longueur supérieure ou égale à 20 cm.

11. Dispositif d'occultation selon l'une quelconque des revendications 1 à 10, **caractérisé en ce que** lesdits godrons (51, 52) s'étendent sur une partie centrale desdits patins.

12. Dispositif d'occultation selon les revendications 10 et 11, **caractérisé en ce que** ladite partie centrale s'étend sur une longueur comprise entre 5 et 12 cm.

13. Véhicule automobile comprenant au moins un dispositif d'occultation pour pavillon et/ou pare-brise d'un véhicule automobile selon l'une quelconque des revendications 1 à 12, comprenant au moins un élément d'occultation coulissant (14₁, 14₂), guidé par deux rails de guidage et coopérant avec au moins une palette d'occultation (15₁, 15₂) articulée par rapport audit élément d'occultation coulissant (14₁, 14₂),
**caractérisé en ce que** ledit élément d'occultation coulissant (14₁, 14₂) coopère avec deux patins (41₁, 41₂) circulant chacun dans l'un desdits rails de guidage (42₁, 42₂), portant chacun deux godrons (51, 52) surmoulés, lesdits godrons présentant une section sensiblement demi-circulaire affleurant de la surface dudit patin, et définissant un élément de frottement avec les semelles latérales (53, 54) dudit rail, de façon à assurer un glissement dur desdits patins dans lesdits rails.

14. Véhicule automobile selon la revendication 13, **caractérisé en ce qu'**il comprend deux éléments d'occultation indépendants, associés respectivement à la place du conducteur et à la place du passager avant.

## Claims

1. Sunshade device for the roof and/or windscreen of a motor vehicle, comprising at least one sliding sunshade element (14₁, 14₂), guided by two guide rails and cooperating with at least one sun visor (15₁, 15₂) articulated in relation to said sliding sunshade element (14₁. 14₂),
**characterised in that** said sliding sunshade element (14₁, 14₂) co-operates with two sliding shoes (41₁, 42₂) each moving back and forth within one of said guide rails (42₁,42₂), each having two friction bodies made as a mould from a casting (51, 52), said friction bodies presenting an approximately semi-circular cross section, protruding from the surface of said sliding shoe and defining a friction element with the lateral base plate pad (53, 54) of said rail, in such a way as to ensure a rigid sliding of said sliding shoes within said rails.

2. Sunshade device according to claim 1, **characterised in that** said friction bodies (51, 52) are of approximately circular cross-section, and are contained within said sliding shoe (41₁) in such a way that only said approximately semi-circular cross-section protrudes.

3. Sunshade device according to any one of claims 1 and 2, **characterised in that** said knurled elements (51, 52) are made of neoprene.

4. Sunshade device according to any one of claims 1 to 3, **characterised in that** said sliding sunshade element presents:
- a first portion with an extremity (141) forming a pull bar, in order to permit manual movement of said sliding sunshade element; and
- a second portion (142), less thick than said first portion and defining a housing space for said sun visor.
and **characterised in that** sun visor (15₁, 15₂) is held approximately parallel to said sunshade element (14₁, 14₂), in a folded-up position, in such a way as to occupy said housing space at least partially.

5. Sunshade device according to claim 4, **characterised in that** said sliding sunshade element (41₁, 41₂) is mobile between a stowage position, in which it partially enters a stowage area, and at least one deployed position.

6. Sunshade device according to any one of claims 4 and 5, **characterised in that** said sunshade element (14₁, 14₂) and/or said sun visor (15₁, 15₂) have/has at least one stop motion device (143) allowing for a free space between said sunshade element and said sun visor, in said folded-up position.

7. Sunshade device according to claim 6, **characterised in that** said stop motion device or devices (143) is/are placed near the axis of articulation of said sun visor.

8. Sunshade device according to claim 6, **characterised in that** said free space permits passage of a portion of an interior lining element defining said stowage area, said sun visor remaining on the outside of said internal lining in said stowage position.

9. Sunshade device according to any one of claims 6 to 8, **characterised in that** said stop motion device or devices (143) come(s) into contact with an internal lining device defining said stowage area, in said stowage position.

10. Sunshade device according to any one of claims 1 to 9, **characterised in that** said sliding shoes (41₁, 41₂) have a length greater than or equal to 20 cm.

11. Sunshade device according to any one of claims 1 to 10, **characterised in that** said knurled elements (51, 52) extend over a central part of said sliding shoes.

12. Sunshade device according to claims 10 and 11, **characterised in that** said central part extends over a length between 5 and 12 cm.

13. A motor vehicle comprising at least one sunshade device for the roof and/or windscreen of a motor vehicle according to any one of claims 1 to 12, comprising at least one sliding sunshade element (14₁, 14₂), guided by two guide rails and cooperating with at least one sun visor (15₁, 15₂) articulated in relation to said sliding screening element (14₁, 14₂),
**characterised in that** said sliding sunshade element (14₁, 14₂) co-operates with two sliding shoes (41₁, 42₂) each moving back and forth within one of said guide rails (42₁,42₂), each having two friction bodies made as a mould from a casting (51, 52), said friction bodies presenting an approximately semi-circular cross section, protruding from the surface of said sliding shoe, and defining a friction element with the lateral base plate pad (53, 54) of said rail, in such a way as to ensure rigid sliding of said sliding shoes within said rails.

14. A motor vehicle according to claim 13, **characterised in that** it comprises two independent sunshade elements, associated with the driver's position and the front passenger's position, respectively.

## Patentansprüche

1. Abdeckungsvorrichtung für ein Karosserieoberteil und/oder eine Windschutzscheibe eines Kraftfahrzeugs, umfassend mindestens ein verschiebbares Abdeckungselement (14₁, 14₂), das in zwei Führungsschienen geführt ist und mit mindestens einer Sonnenblende (15₁, 15₂) zusammenwirkt, die verschwenkbar gegenüber dem verschiebbaren Abdeckungselement (14₁, 14₂) ist,
**dadurch gekennzeichnet, dass** das verschiebbare Abdeckungselement (14₁, 14₂) mit zwei Gleitstücke (41₁, 41₂) zusammenwirkt, welche sich jeweils in einer der Führungsschienen (42₁, 42₂) bewegen, und welche jeweils zwei umformte Reibungskörper (51, 52) tragen, wobei die Reibungskörper einen im Wesentlichen halbkreisförmig über die Oberfläche des Gleitstücks hinausragenden Querschnitt aufweisen und mit den seitlichen Auflageflächen (53, 54) der Schiene ein Reibungselement derart definieren, dass ein starres Gleiten der Gleitstücke in den Schienen sichergestellt wird.

2. Abdeckungsvorrichtung nach Anspruch 1, **dadurch gekennzeichnet, dass** die Reibungskörper (51, 52) einen im Wesentlichen kreisförmigen Querschnitt aufweisen und in dem Gleitstück (41₁) derart eingebettet sind, dass nur der im Wesentlichen halbkreisförmige Querschnittsabschnitt freiliegt.

3. Abdeckungsvorrichtung nach einem der Ansprüche 1 und 2, **dadurch gekennzeichnet, dass** die Reibungskörper (51, 52) in Neopren ausgeführt sind.

4. Abdeckungsvorrichtung nach einem der Ansprüche 1 bis 3, **dadurch gekennzeichnet, dass** das verschiebbare Abdeckungselement aufweist
- einen ersten Endbestandteil (141), der eine Zugstange bildet, um eine manuelle Bewegung des verschiebbaren Abdeckungselements zu ermöglichen; und
- einen zweiten Bestandteil (142) mit im Vergleich zur Dicke des ersten Bestandteils verminderter Dicke, der einen Verstauraum für die Sonnenblende definiert,
und dass die Sonnenblende (15₁, 15₂) im Wesentlichen parallel zum Abdeckungselement (14₁, 14₂) derart in eine eingefahrene Position zurückgebracht wird, dass sie mindestens zum Teil den Verstauraum einnimmt.

5. Abdeckungsvorrichtung nach Anspruch 4, **dadurch gekennzeichnet, dass** das verschiebbare Abdeckungselement (14₁, 14₂) zwischen einer Verstauposition, in welcher es zum Teil in einen Verstaubereich eintaucht, und mindestens einer ausgefahrenen Position beweglich ist.

6. Abdeckungsvorrichtung nach einem der Ansprüche 4 und 5, **dadurch gekennzeichnet, dass** das Abdeckungselement (14₁, 14₂) und/oder die Sonnenblende (15₁, 15₂) mindestens einen Anschlag (143) trägt, der es ermöglicht, einen freien Raum zwischen dem Abdeckungselement und der Sonnenblende, in der eingefahrenen Position vorzusehen.

7. Abdeckungsvorrichtung nach Anspruch 6, **dadurch gekennzeichnet, dass** der oder die Anschläge (143) in der Nähe der Drehachse der Sonnenblende angebracht sind.

8. Abdeckungsvorrichtung nach Anspruch 6, **dadurch gekennzeichnet, dass** der freie Raum den Durchlass eines Teils eines Innengarniturelements ermöglicht, welches den Verstaubereich definiert, wobei die Sonnenblende in der Verstauposition außerhalb der Innengarnitur verbleibt.

9. Abdeckungsvorrichtung nach einem der Ansprüche 6 bis 8, **dadurch gekennzeichnet, dass** der oder die Anschläge (143) in der Verstauposition mit einem Innenverkleidungselement in Kontakt gelangen, welches den Verstaubereich definiert.

10. Abdeckungsvorrichtung nach einem der Ansprüche 1 bis 9, **dadurch gekennzeichnet, dass** die Gleitstücke (41₁, 41₂) eine Länge größer oder gleich 20 cm aufweisen.

11. Abdeckungsvorrichtung nach einem der Ansprüche 1 bis 10, **dadurch gekennzeichnet, dass** die Reibungskörper (51, 52) sich über einen zentralen Teil der Gleitstücke erstrecken.

12. Abdeckungsvorrichtung nach den Ansprüchen 10 und 11, **dadurch gekennzeichnet, dass** der zentrale Teil sich über eine Länge zwischen 5 und 12 cm erstreckt.

13. Kraftfahrzeug umfassend mindestens eine Abdeckungsvorrichtung für ein Karosserieoberteil und/oder eine Windschutzscheibe eines Kraftfahrzeugs nach einem der Ansprüche 1 bis 12, die mindestens ein verschiebbares Abdeckungselement (14₁, 14₂) umfasst, das in zwei Führungsschienen geführt ist und mit mindestens einer Sonnenblende (15₁, 15₂) zusammenwirkt, die verschwenkbar gegenüber dem verschiebbaren Abdeckungselement (14₁, 14₂) ist,
**dadurch gekennzeichnet, dass** das verschiebbare Abdeckungselement (14₁, 14₂) mit zwei Gleitstücken (41₁, 41₂) zusammenwirkt, welche sich jeweils in einer der Führungsschienen (42₁, 42₂) bewegen, und welche jeweils zwei umformte Reibungskörper (51, 52) tragen, wobei die Reibungskörper einen im Wesentlichen halbkreisförmig über die Oberfläche des Gleitstücks hinausragenden Querschnitt aufweisen und mit den seitlichen Auflageflächen (53, 54) der Schiene ein Reibungselement derart definieren, dass ein starres Gleiten der Gleitstücke in den Schienen sichergestellt wird.

14. Kraftfahrzeug nach Anspruch 13, **dadurch gekennzeichnet, dass** es zwei unabhängige Abdeckungselemente aufweist, die jeweils dem Fahrersitz und dem Beifahrersitz zugeordnet sind.
